# EUROPEAN PATENT SPECIFICATION

(11) **EP 2 187 576 B1**
(45) Date of publication and mention of the grant of the patent: **06.11.2013**
(21) Application number: 08834634.1
(22) Date of filing: 25.09.2008
(51) Int. Cl.: H04L 29/08, H04L 12/751, H04L 12/721, H04L 12/747, H04L 12/801

(54) **Message route methods, sending nodes and system**
Nachrichtenleitwegverfahren, Sendeknoten und System,
Procédés d'acheminement de messages, noeuds d'envoi et système

(30) Priority: 26.09.2007 CN 200710122463
(43) Date of publication of application: 19.05.2010
(60) Divisional application: 11188224.7
(73) Proprietor: Huawei Technologies Co., Ltd., Longgang District, Shenzhen Guangdong 518129 (CN)
(72) Inventor: JIANG, Haifeng, Shenzhen, 518129 (CN); LI, Feng, Shenzhen, 518129 (CN); JIANG, Xingfeng, Shenzhen, 518129 (CN); HAN, Lei, Shenzhen, 518129 (CN)
(74) Representative: Kreuz, Georg Maria
(86) International application number: PCT/CN2008/072532
(87) International publication number: WO 2009/039796

(56) References cited:
- CN-A- 1 571 385
- CN-A- 1 719 805
- CN-A- 1 913 454
- CN-A- 101 039 247
- US-A1- 2007 002 869
- HAIYING SHEN ET AL: "Elastic Routing Table with Provable Performance for Congestion Control in DHT Networks" DISTRIBUTED COMPUTING SYSTEMS, 2006. ICDCS 2006. 26TH IEEE INTERNATION AL CONFERENCE ON LISBOA, PORTUGAL 04-07 JULY 2006, PISCATAWAY, NJ, USA,IEEE, PISCATAWAY, NJ, USA LNKD- DOI:10.1109/ICDCS.2006.35, 4 July 2006 (2006-07-04), pages 15-15, XP010927320 ISBN: 978-0-7695-2540-2
- SERBU S ET AL: "Dynamic Load Sharing in Peer-to-Peer Systems: When Some Peers Are More Equal than Others" IEEE INTERNET COMPUTING, IEEE SERVICE CENTER, NEW YORK, NY, US, vol. 11, no. 4, 1 July 2007 (2007-07-01), pages 53-61, XP011187210 ISSN: 1089-7801

## Description

### Field of the Invention

The present invention relates to communications, and in particular, to a method, system and device for packet routing.

### Background of the Invention

A Peer to Peer (P2P) network is a distributed network, where participants share some hardware resources they own (e.g. processing capabilities, storage capabilities, network connection capabilities, printers). The shared resources can be accessed by other peer nodes through the services and contents provided by the network without the need of any intermediate entity. The participants in the network are both providers of resources (service and content) and consumers of resources (service and content). P2P breaks the traditional Client/Server (C/S) model so that all nodes in a network are peers. A node is both a server that provides services for other nodes and a client that enjoys services provided by other nodes. P2P fully uses the capabilities of every node in a system to provide mutual services, thus increasing the utilization of the nodes and improving the performance of the network, devices and information services.

In a structured P2P system, the publication of resources is closely related to the network topology, and resources are distributed in the network precisely according to the logical addresses in the P2P topology. In the system, every node has a virtual logical address and all nodes make up a relatively stable and close topology according to their addresses. In the structured P2P system, a value generated by a Hash operation on a resource is a resource mark value, indicated by a key. The name space of keys is mapped to the name space of nodes; that is, one key corresponds to one node. Resources are distributed in the structured P2P system according to the mapping between keys and nodes so that resources can be found according to the corresponding keys.

In the structured P2P system, each node stores a section of a key space, which is calculated according to a Distributed Hash Table (DHT). The key space varies with the DHT algorithm. For example, according to the chord algorithm, if node A and node B are neighbors and the ID of node A is smaller than the ID of node B, the key space managed by node A is made up of the keys in the numeral space from node A ID to node B ID.

DHT algorithms include chord and pastry, providing key based resource search in a structured P2P network. A root is found according to a key, and the resource corresponding to the key is obtained or stored at the root.

When a packet is routed in a structured P2P system, the path corresponding to a key (related to destination node) in the packet is determined according to the key and a certain algorithm, and the packet is routed to the destination node by a number of intermediate nodes with a gradual approaching method.

The routing table on a node in a P2P overlay network is calculated and searched out according to the DHT algorithms. Taking the chord algorithm as an example, the routing table on a node is shown in Table 1.

**Table 1**

| **No.** | **Node ID** | **IP Address** |
|---|---|---|
| 1 | X | 66.249.67.150 |
| 2 | Y | 66.249.67.151 |
| 3 | Z | 66.249.67.152 |
| ... | ... | ... |
| N | n | 66.249.67.n |

In the chord algorithm, when a node is routing a packet, the node finds a proximate node ID from its routing table according to the key in the packet and forwards the packet to the node corresponding to the node ID. Every node routes the packet by following this rule until the packet arrives at the destination node (whose node ID is the key).

However, in a P2P overlay system, the processing capability of each node varies and packets with different keys will be routed via different numbers of hops. As a result, some nodes in the P2P overlay system will process more packets while other nodes will process fewer packets. Nodes that process large numbers of packets and those with weak processing capabilities may fail to provide enough capabilities, which causes congestion in the P2P overlay system and as a result, subsequent packets will not be forwarded or processed.

To avoid congestion in the P2P overlay system, the prior art provides a path choosing method as follows:
(1) Before sending packets to a destination node, a sending node (source node) sends a congestion detection packet to the destination node.
(2) After an intermediate node receives the congestion detection packet, if congestion occurs, the intermediate node sets the Explicit Congestion Notification (ECN) of the congestion detection packet as 1 and forwards the congestion detection packet to the destination node.
(3) The destination node sends a congestion notification to the sending node, where the notification carries congestion information of the intermediate node, notifying the sending node that the path is congested.
(4) Upon reception of the congestion notification, the sending node chooses another path instead of the path.

In the routing table of a node in the P2P overlay system, the node may choose a next hop from k available nodes. Among the k nodes, one is the proximate node searched out via DHT and other nodes are all adjacent to the proximate node. If the congestion notification shows that the proximate node is congested, the sending node chooses one from the other k-1 nodes as the next hop.

However, when the sending node sends a packet to a destination node, the sending node must first send a congestion detection packet, which causes delay in transmission; moreover, because a node in the above solution has only two states, congested and non-congested, and in a P2P overlay network, the topological state between nodes is unstable, which means the routing table changes dynamically, even after a congestion detection packet is sent, the overlay path may change due to changes in nodes so that the test result is not accurate.

In addition: the choice of backup resources in the existing multicast solution does not take into full account the actual processing capability of the chosen backup resource so that the chosen backup resource may fail to provide enough processing capabilities, which results in loss of information and affects the normal transport of multicast traffic.

Shen H et al, "Elastic Routing Table with Provable Performance for Congestion Control in DHT Networks" (ICDCS'06, 2006, XP10927320) discloses the idea of allowing each node to have a routing table of variable size corresponding to its capacity.

### Summary of the Invention

To balance the loads on a path and avoid network congestion, the present invention provides methods, sending nodes and a system for packet routing. The technical solution is as follows:
As a first aspect of the invention the method (defined by independent claim 1) for packet routing includes:
   sending (101) a state level query request to nodes in a routing table at the predetermined intervals;
   by a node that receives the state level query request, checking (102) its busy state, determining its busy level according to the busy state and returning a state level query response which carries the busy level, wherein the busy levels comprise: busy level 1 where all packets can be processed, busy level 2 where only packets within a key range in the charge of the node can be processed, and state level 3 where no packets can be processed;
   when the busy level of the node receiving the state level query request is busy level 2, the state level query response carries the key range in the charge of the node receiving the state level query request; and
   upon reception of the state level query response, updating (103) the busy level corresponding to the node according to the busy level carried in the state level query response; and
   searching for a next-hop node in the routing table according to a Distributed Hash Table, DHT, algorithm, judging the busy level of the next-hop node, and if the busy level is 2 or 3, checking whether the destination of the packet is within the key range in the charge of the next-hop node, and if the destination is within the range, when the next-hop node is at busy level 2, sending the packet to the next-hop node or when the next-hop node is at busy level 3, sending the packet to a proxy node of the next-hop node.

In another implementation form the method (as defined by independent claim 3) for packet routing according to the first aspect of the invention includes:
measuring the number of packets sent by the local node to nodes in the local routing table at the predetermined intervals;
comparing the number of packets with a pre-negotiated top threshold and/or middle threshold; and
updating the busy levels of nodes according to a comparison result; and
searching for a next-hop node in the routing table according to a Distributed Hash Table, DHT, algorithm, measuring the number of packets sent by the local node to the next-hop node, and if the number of packets is above or equal to the middle threshold, checking whether the destination of the packet is within the key range in the charge of the next-hop node, and if the destination is within the range, when the number of packets is between the middle threshold and the top threshold, sending the packet to the next-hop node or when the number of packets is above or equal to the top threshold, sending the packet to a proxy node of the next-hop node.

As a second aspect of the invention it is provided a sending node (as defined by independent claim 4), comprising:
a message sending module, adapted to send a state level query request to nodes in a local routing table at predetermined intervals;
a busy level updating module, adapted to: receive state level query responses and update busy levels of corresponding nodes in the routing table according to the busy levels carried in the state level query responses; and
a packet sending module, comprising:
   a checking unit, adapted to: search for a next-hop routing node in the routing table according to the DHT algorithm, judge the busy level of the next-hop routing node, wherein busy levels comprise busy level 1 where all packets can be processed, busy level 2 where only packets within the key range in the charge of the next-hop node can be processed and busy level 3 where no packets can be processed; and if the busy level is 2 or 3, determine whether the destination of the packet is within the key range in the charge of the next-hop routing node; and
   a packet sending unit, when the checking unit determines that the destination is within the key range in the charge of the next-hop routing node, adapted to: send the packet to the next-hop node if the next-hop routing node is at busy level 2, or send the packet to a proxy node of the next-hop routing node if the next-hop routing node is at busy level 3.

In another implementation of the second aspect of the invention it is provided a sending node (as defined by independent claim 5), comprising:
a measuring module, adapted to measure the number of packets sent by the local node to nodes in a local routing table at predetermined intervals;
a comparing module, adapted to compare the number of packets measured by the measuring module and a pre-negotiated top threshold and/or middle threshold;
a busy level updating module, adapted to update busy levels of nodes according to a comparison result of the comparing module; and
a packet sending module, comprising:
   a checking unit, adapted to: search for a next-hop routing node in the routing table according to the DHT algorithm, check the number of packets sent by the local node to the next-hop node, and if the number of packets is above or equal to the middle threshold, judge whether the destination of the packet is within the key range in the charge of the next-hop routing node; and
   a packet sending unit, when the checking unit determines that the destination is within the key range in the charge of the next-hop routing node, adapted to: send the packet to the next-hop routing node if the number of packets is between the middle threshold and the top threshold, or send the packet to a proxy node of the next-hop routing node if the number of packets is above or equal to the top threshold.

As a third aspect of the invention it is provided a system as defined by independent claim 6.

The technical solution provides the following benefit:

Because a packet receiving node is chosen with reference to the busy levels of nodes in its routing table, the distribution of loads among the nodes is balanced and the happening of network congestion is avoided.

### Brief Description of the Drawings

FIG 1 shows a flowchart of a method for packet routing according to a first embodiment of the present invention;
FIG 2 compares routes from node A to node I according to the first embodiment of the present invention;
FIG 3 shows a flowchart of a method for packet routing according to a second embodiment of the present invention;
FIG 4 is a schematic drawing of a system for packet routing according to a third embodiment of the present invention;
FIG 5 shows the networking of a system for choosing backup resources according to an example which is not part of the present invention; and
FIG 6 shows a system for choosing backup resources according to an example which is not part of the present invention.

### Detailed Description of the Embodiments

To make the technical solution, objectives and merits of the present invention clearer, the following describes the embodiments of the present invention in detail with reference to accompanying drawings.

In the embodiments of the present invention, the busy level of one node is set to multiple levels and is notified to other nodes.

When a sending node sends a packet, the sending node chooses the route according to the busy levels of other nodes. This will prevent congestion in the network and achieve load balancing to some extent.

### First Embodiment

The first embodiment of the present invention provides a method for packet routing. The method includes: updating busy levels of nodes at preset intervals, where multiple busy levels are defined; choosing a packet receiving node according to a Distributed Hash Table (DHT) algorithms and the busy levels of nodes; and sending the packet to the chosen node.

The busy level of a node is preset according to the processing capability of the node. When necessary, multiple busy levels may be set. A node may measure the number of packets it receives in a certain period and determine its busy level according to the measurement result, its Central Processing Unit (CPU) state, its memory size, and network bandwidth. The determination may also make reference to the will of the node and other hardware performance indicators. Because the number of received packets is dynamic, the busy level of a node is also dynamic.

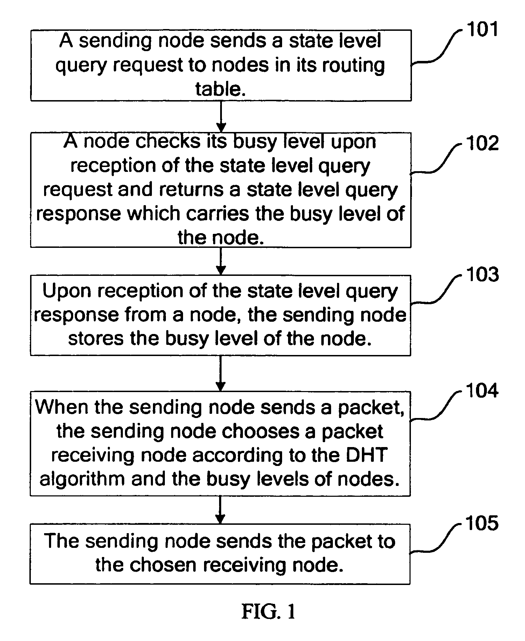

FIG. 1 shows a flowchart of a method for packet routing according to an embodiment of the present invention. The method for packet routing includes the following steps:
Step 101: A sending node sends a state level query request to nodes in its routing table.
   The state level query request may be a normal KeepAlive message or a user-defined message for the purpose of checking whether other nodes are online as well as their busy levels.
Step 102: Upon reception of the state level query request from the sending node, a node checks its current busy level and sends to the sending node a state level query response which carries the busy level of the node.

In this embodiment, the state of a node is categorized into three busy levels:
Busy level 1: The node is idle and able to process (forward or terminate) all packets;
Busy level 2: The node is busy but not very busy and is able to process packets whose destination is in the key range of the node; and
Busy level 3: The node is very busy and able to process no subsequent packets, and packets destined for the node need to be processed by a proxy node of the node while packets not destined for the node will not be forwarded to the proxy node.

When the current busy level of the node is 1, the state level query response of the node carries busy level 1; when the current busy level of the node is 2, the state level query response of the node carries busy level 2 and its key space; when the current busy level of the node is 3, the state level query response sent by the node carries busy level 3, its key space, and the key of its proxy node.

If necessary, four busy levels may be set:
Busy level 1: The node is very idle and able to act as a proxy node of other nodes and process all packets;
Busy level 2: The node is idle and able to process all packets but unable to act as a proxy node of other nodes;
Busy level 3: The node is busy but not very busy and is able to process packets whose destination is in the key range of the node; and
Busy level 4: The node is very busy and able to process no subsequent packets, and packets destined for the node need to be processed by a proxy node of the node while packets not destined for the node will not be forwarded to the proxy node.

When the current busy level of the node is 1, the state level query response of the node carries busy level 1; when the current busy level of the node is 2, the state level query response of the node carries busy level 2; when the current busy level of the node is 3, the state level query response of the node carries busy level 3 and its key space; when the current busy level of the node is 4, the state level query response sent by the node carries busy level 4, its key space, and the key of its proxy node.

The states corresponding to the busy levels are relative. Taking the three busy levels as an example, the three busy levels can be measured by comparing the CPU occupancy, remaining bandwidth and free memory size. For example, in the case of a node with 1 GHz CPU, 256 MB memory and 500 kbps bandwidth, when the CPU occupancy rate is below or equal to 50%, and/or the free memory size is above or equal to 40 MB, and/or the free bandwidth is above or equal to 200 kbps, the node is at busy level 1; when the CPU occupancy rate is between 50% and 70%, and/or the free memory size is between 10 MB and 40 MB, and/or the free bandwidth is between 50 kbps and 200 kbps, the node is at busy level 2; and when the CPU occupancy rate is above or equal to 70%, and/or the free memory size is below or equal to 10 MB, and/or the free bandwidth is below or equal to 50 kbps, the node is at busy level 3. For other divisions of busy levels, the measurement of each level is alike. The numerical values here are exemplary only and other values and specific criteria may be adopted as well.

Step 103: Upon reception of the state level query response from the node, the sending node stores the current busy level of the node.

The current busy level of the node may be stored in a routing entry corresponding to the node in the routing table or in a user-defined table.

Step 104: When the sending node wishes to send a packet, the sending node chooses a node that receives the packet according to a predetermined policy with reference to the DHT algorithm and the busy levels of nodes.

The predetermined policy means the preset processing corresponding to each busy level, for example, sending to a node at busy level 2 only packets in its key range.

Step 105: The sending node sends the packet to the chosen receiving node.

The sending node determines the receiving node according to the busy levels of nodes in the routing table. Taking the three busy levels as an example, the specific processing is as follows:
(1) For a node at busy level 1, all packets can be sent to the node.
(2) For a node at busy level 2, only packets destined for a node in its key space are sent to the node.
(3) For a node at busy level 3, packets destined for a node in its key space are forwarded to its proxy node.

In the above method, the state level query response returned by a node to the sending node carries the busy level of the node. When the current state of the node approaches the processing limit of the node, the node may send a special message to notify the sending node so as to help the sending node choose an appropriate receiving node for subsequent packets according to the current state of the node.

The processing capability of a node may also impact the busy level of the node. For example, because of poor hardware performance of a node, the idlest state of the node may not be up to busy level 1 and is busy level 2 at most.

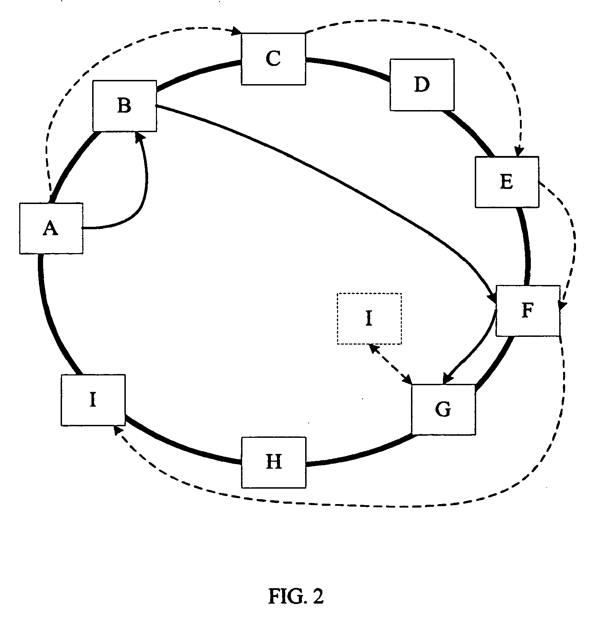

FIG. 2 compares the routes from node A to node I in the embodiment of the present invention. Suppose the busy levels of nodes are stored in the routing table:
(1) Taking node A and node F as an example, when all nodes are idle, the routing table on node A is shown in Table 2 and the routing table on node F is shown in Table 3.

**Table 2**

| **Node ID** | **IP Address** | **Busy Level** |
|---|---|---|
| B | ××× | Busy level 1 |
| C | ××× | Busy level 1 |
| ... | ... | ... |

**Table 3**

| **Node ID** | **IP Address** | **Busy Level** |
|---|---|---|
| G | ××× | Busy level 1 |
| H | ××× | Busy level 1 |
| I | ××× | Busy level 1 |
| ... | ... | ... |

A packet is routed from node A to node I along the route A→C→E→F→I, as shown in the dashed lines in FIG. 2.
(2) When some nodes on the route are congested, for example, when node C, node G and node H are at busy level 2, and node I is at busy level 3, while the proxy node of node I is node G, the routing table on node A is shown in Table 4 and the routing table on node F is shown in Table 5.

**Table 4**

| **Node ID** | **IP Address** | **Busy Level** |
|---|---|---|
| B | ××× | Busy level 1 |
| C | ××× | Busy level 2 |
| ... | ... | ... |

**Table 5**

| **Node ID** | **IP Address** | **Busy Level** |
|---|---|---|
| G | ××× | Busy level 2 |
| H | ××× | Busy level 2 |
| I | ××× | Busy level 3 |
| ... | ... | ... |

In this case, when node A sends a packet to node I, node A checks the busy levels of nodes in the local routing table. When node A finds the busy level of node C is 2, node A sends the packet to node B. Node B forwards the packet to node F according to information in its local routing table. Node F checks its local routing table to find that node I is at busy level 3 and forwards the packet to the proxy node G of node I. Therefore, the route from node A to node I is A→B→F→G, as shown in the solid lines in FIG 2.

In this embodiment, a node chooses a packet receiving node with reference to the busy levels of nodes in its routing table so as to balance the loads among the nodes and avoid the happening of network congestion. In addition, the destination of the packet is fully considered so that the packet to be processed by a node is sent to the node with best efforts.

### Second Embodiment

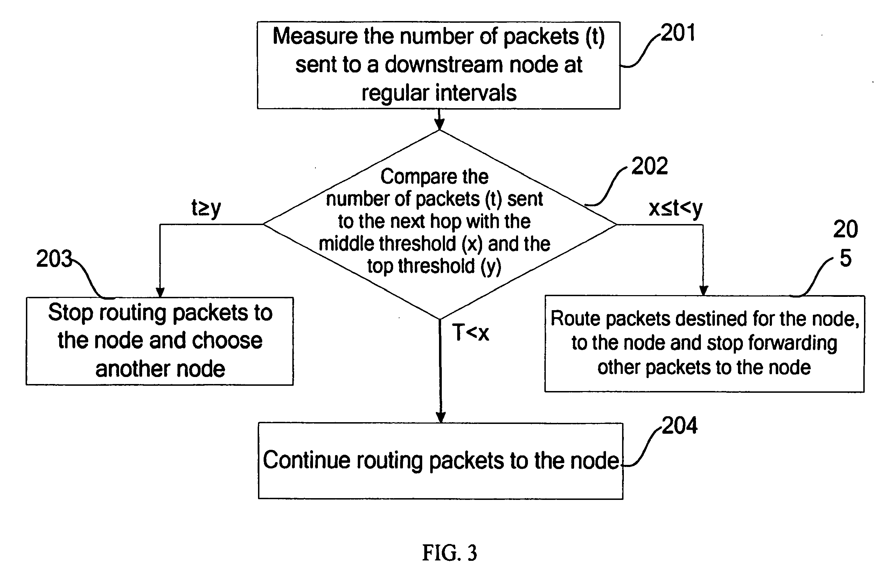

The second embodiment of the present invention provides another method for packet routing. The sending node negotiates with a downstream node in advance about the top threshold and middle threshold of packets sent to the node in a given period. The downstream node will notify the sending node of its proxy node during the negotiation. The sending node records the negotiated top threshold and middle threshold and the corresponding proxy node. Such information may be written in corresponding entries in the routing table or another user-defined table. In this embodiment, the information is recorded in the routing table for easy description. FIG. 3 shows a flowchart of a method for packet routing in the embodiment of the present invention, including:
Step 201: Count the number of packets (t) sent to a downstream node at regular intervals.
Step 202: Search for the next-hop node in the routing table according to the DHT algorithm and compare the measured number of packets (t) sent to the next-hop node with the middle threshold x and the top threshold y. If t is above or equal to y, the process proceeds to step 203; if t is below x, the process proceeds to step 204; and if t is between x and y, the process proceeds to step 205.
Step 203: Stop routing packets to the node and choose another node.
Step 204: Continue routing packets to the node.
Step 205: Route packets destined for the node to the node and stop forwarding other packets to the node.

In this embodiment, when the key range of a node changes, the node will notify its upstream node of the changed key range.

Still take the nodes shown in FIG. 2 as an example:
(1) The number of packets sent to node B measured by node A is between the middle threshold x and the top threshold y while the number of packets sent to another node is below x. Taking node A and node F as an example, the routing table on node A is shown in Table 6 and the routing table on node F is shown in Table 7.

**Table 6**

| **Node ID** | **IP Address** | **Middle Threshold (x)** | **Top Treshold (y)** | **Measurement (t)** |
|---|---|---|---|---|
| B | xxx | x(B) | y(B) | x(B)<t(B)<y(B) |
| C | ××× | x(C) | y(C) | t(C)<x(C) |
| ... | ... | ... | ... | ... |

**Table 7**

| **Node ID** | **IP Address** | **Middle Threshold (x)** | **Top Treshold (y)** | **Measurement (t)** |
|---|---|---|---|---|
| G | ××× | x_{(G)} | y_{(G)} | t_{(G)}<x_{(G)} |
| H | ××× | x_{(H)} | y_{(H)} | t_{(H)}<x_{(H)} |
| I | ××× | x_{(I)} | y_{(I)} | t_{(I)}<x_{(I)} |
| ... | ... | ... | ... | ... |

A packet is routed from node A to node I along the route A→C→E→F→I, as shown in the dashed lines in FIG. 2.
(2) When some nodes are forwarding more packets, for example, when the measured number of packets sent to node C, node G and node H is between x and y and the number of packets sent to node I is above y, while the proxy node of node I is node G, the routing table on node A is shown in Table 8 and the routing table on node F is shown in Table 9.

**Table 8**

| **Node ID** | **IP Addres** | **Middle Threshold (x)** | **Top Threshold (y)** | **Measurement (t)** |
|---|---|---|---|---|
| B | ××× | x_{(B)} | y_{(B)} | t_{(B)}<x_{(B)} |
| C | ××× | x_{(C)} | y_{(C)} | x_{(C)}<t_{(C)}<y_{(C)} |
| ... | ... | ... | ... | ... |

**Table 9**

| **Node ID** | **IP Address** | **Middle Threshold (x)** | **Top Threshold (y)** | **Measurement (t)** |
|---|---|---|---|---|
| G | ××× | x_{(G)} | y_{(G)} | x_{(G)}<t_{(G)}<y_{(G)} |
| H | ××× | x_{(H)} | y_{(H)} | x_{(H)}<t_{(H)}<y_{(H)} |
| I | ××× | x_{(I)} | y_{(I)} | t_{(I)}<y_{(I)} |
| ... | ... | ... | ... | ... |

In this case, when node A sends a packet to node I, node A measures the number of packets (t) sent to nodes in the local routing table within a certain period and finds that the number of packets sent to node C is between the middle threshold and the top threshold. Then node A sends the packet to node B. Node B forwards the packet to node F according to information in its local routing table. Node F checks its local routing table to find that the number of packets processed by node I has exceeded the top threshold and forwards the packet to the proxy node G of node I. Therefore, the route from node A to node I is A→B→F→G, as shown in the solid lines in FIG. 2.

In this embodiment, a node chooses a packet receiving node with reference to the busy levels of nodes in its routing table so as to balance the loads among the nodes and avoid the happening of network congestion. In addition, the destination of the packet is fully considered so that the packet to be processed by a node is sent to the node with best efforts.

### Third Embodiment

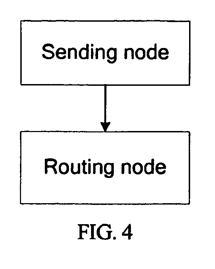

FIG. 4 is a schematic drawing of a system for packet routing according to the third embodiment of the present invention. The system for packet routing includes:
a sending node, adapted to: update busy levels of nodes at predetermined intervals and choose a packet receiving node according to the DHT algorithm and the busy levels of nodes in its routing table, and send the packet to the chosen routing node; and
the routing node, adapted to: receive the packet from the sending node and choose a next-hop routing node according to the DHT algorithm and locally stored busy levels of other nodes.

The sending node includes:
a message sending module, adapted to send a state level query request to nodes in the local routing table at predetermined intervals;
a busy level updating module, adapted to: receive a state level query response and update the busy level of the corresponding node in the routing table according to the busy level carried in the state level query response; and
a packet sending module, adapted to: choose a packet receiving routing node according to the DHT algorithm and the busy levels of nodes in the routing table updated by the busy level updating module and send the packet to the chosen packet receiving routing node.

Further, the packet sending module includes:
a checking unit, adapted to: search for the next-hop routing node in the routing table according to the DHT algorithm, judge the busy level of the next-hop routing node, where busy levels include busy level 1 where all packets can be processed, busy level 2 where only packets within the key range of the next-hop node can be processed and busy level 3 where no packets can be processed; and if the busy level is 2 or 3, determine whether the destination of the packet is within the key range in the charge of the next-hop routing node; and
a packet sending unit, adapted to: send the packet to the next-hop node when the checking unit determines that the destination is within the key range in the charge of the next-hop node and the busy level of the next-hop node is 2; or when the busy level of the next-hop node is 3, send the packet to a proxy node of the next-hop node; or when the busy level of the next-hop node is 1, send any packet to the next-hop node.

Accordingly, the routing node includes:
a busy state checking module, adapted to check the busy state of the local node upon reception of a state level query request from the sending node;
a busy level determining module, adapted to determine a busy level according to the check result of the busy state checking module;
a message responding module, adapted to return to the sending node a state level query response which carries the busy level determined by the busy level determining module; and
a packet forwarding module, adapted to: receive the packet from the sending node and choose a next-hop routing node according to the DHT algorithm and locally stored busy levels of other nodes.

Alternatively, when the busy level of a downstream node is measured by the number of packets sent by the local node to the node, the sending node includes:
a measuring module, adapted to measure the number of packets sent by the local node to nodes in the local routing table at regular intervals;
a comparing module, adapted to compare the number of packets measured by the measuring module and a pre-negotiated top threshold and/or middle threshold;
a busy level updating module, adapted to update busy levels of nodes according to the comparison result of the comparing module; and
a packet sending module, adapted to: choose a packet receiving node according to the DHT algorithm and the busy levels of nodes updated by the busy level updating module and send the packet to the chosen packet receiving node.

Further, the packet sending module includes:
a checking unit, adapted to: search for the next-hop node in the routing table according to the DHT algorithm, check the number of packets sent by the local node to the next-hop node, and if the number of packets is above or equal to the middle threshold, judge whether the destination of the packet is within the key range in the charge of the next-hop node; and
a packet sending unit, adapted to: send the packet to the next-hop node when the checking unit determines that the destination is within the key range in the charge of the next-hop node and the number of packets is between the middle threshold and the top threshold; or when the number of packets is above or equal to the top threshold, send the packet to the proxy node of the next-hop node; or when the number of packets is below the middle threshold, send any packet to the next-hop node.

Accordingly, the routing node is adapted to: receive the packet from the sending node and choose a next-hop routing node according to the DHT algorithm and locally stored busy levels of other nodes.

In this embodiment, a node chooses a packet receiving node with reference to the busy levels of nodes in its routing table so as to balance the loads among the nodes and avoid the happening of network congestion. In addition, the destination of the packet is fully considered so that the packet to be processed by a node is sent to the node with best efforts.

### Example

An example which is not part of the present invention provides a method for choosing backup resources. The method includes: a state advertising node advertises its busy level to other nodes within a multicast group; and a backup resource choosing node chooses a proxy node according to the received busy levels of nodes.

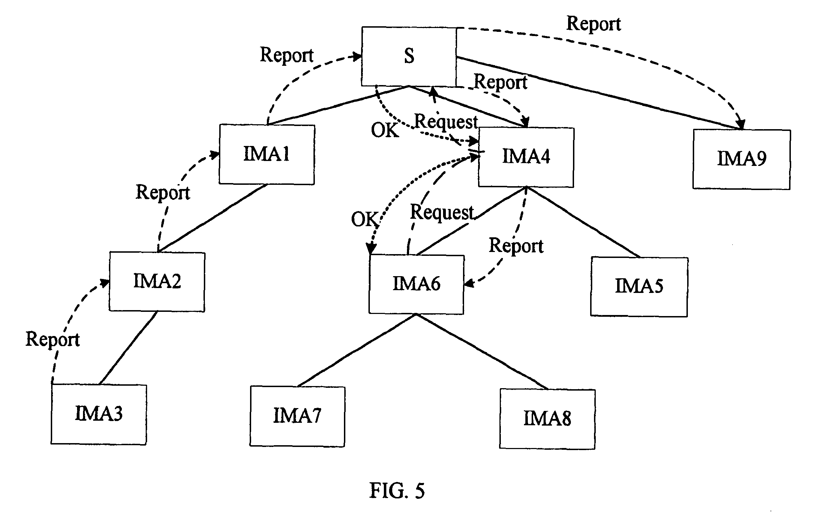

FIG. 5 shows the network structure provided in this example. In the case that an IPTV Multicast Agent (IMA3) advertises its busy level, the process of choosing a backup resource in an application layer multicast group is as follows:
1. The IMA3 checks resources (bandwidth, CPU processing capability and storage space) available for the local node, determines its busy level according to the available resources, and advertises its busy level via a Report message for reference of other nodes so that other nodes may decide whether to choose the IMA3 as a proxy node, or a backup resource.
2. When the Report message is delivered upward, every passed node judges whether any other branch is in need of the IMA3 to act as a proxy node and if in need, relays the Report message to the branch in need and marks itself as a backup request processing node. If no other branch is in need of the IMA3 to act as a proxy node, the node continues delivering the Report message upward until the Report message arrives at the data source node S.
3. The data source node S detects another branch of the local node is in need of the backup resource, and therefore relays the Report message to the branch and marks the local node as a backup request processing node.
4. When a child node in the branch of the data source node S receives the Report message, the child node makes a choice according to its need, and when it is not in need, continues delivering the Report message to its downstream node, or when it is in need, chooses the IMA3 as its backup resource without relaying the Report message to its downstream node.
5. When a node in the branch chooses the IMA3 as its backup resource, the node sends a Backup Req to the data source node S and S responds to the backup requesting nodes with an OK or failure message according to the first-come-first-served principle.
6. The node that receives the OK message takes the IMA3 as its proxy node and nodes receiving the failure response will not forward the failure message.

For example, the IMA6 chooses the IMA3 as its backup resource and notifies the data source node S of the choice via a Backup Req and the data source node S returns an OK message in response to the Backup Req. Upon reception of the OK, the IMA6 regards the IMA3 as its proxy node.

In this example, a node chooses an appropriate node as its proxy node with reference to the busy levels (processing capabilities) of other nodes, so that the chosen node is appropriate and able to fulfill resource backup.

### Example

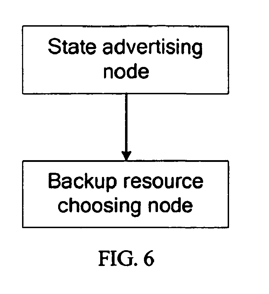

FIG. 6 shows a system for choosing backup resources according to another example which is not part of the present invention. The system includes:
a state advertising node, adapted to broadcast the busy level of the local node to other nodes in one multicast group; and
a backup resource choosing node, adapted to choose a proxy node according to the received busy levels advertised by state advertising nodes.

In the technical solution of the fourth and the fifth embodiments, in a multicast group, a node chooses an appropriate node as its proxy node with reference to the busy levels (processing capabilities) of other nodes, so that the chosen node is appropriate and able to fulfill resource backup.

The software corresponding to the technical solution provided in the embodiments of the present invention may be stored in a computer readable storage medium such as a computer hard disk or a compact disk.

In the embodiments, a node chooses an appropriate node as its proxy node with reference to the busy levels (processing capabilities) of other nodes, so that the chosen node is appropriate and able to fulfill resource backup.

Although the invention has been described through several exemplary embodiments, the invention is not limited to such embodiments. It is apparent that those skilled in the art can make various modifications and variations to the invention.

## Claims

1. A method for packet routing, comprising:
sending (101) a state level query request to nodes in a routing table at the predetermined intervals;
by a node that receives the state level query request, checking (102) its busy state, determining its busy level according to the busy state and returning a state level query response which carries the busy level, wherein the busy levels comprise: busy level 1 where all packets can be processed, busy level 2 where only packets within a key range in the charge of the node can be processed, and busy level 3 where no packets can be processed;
when the busy level of the node receiving the state level query request is busy level 2, the state level query response carries the key range in the charge of the node receiving the state level query request; and
when the busy level of the node receiving the state level query request is busy level 3, the state level query response carries the key range in the charge of the node receiving the state level query request and a key of its proxy node; and
upon reception of the state level query response, updating (103) the busy level corresponding to the node according to the busy level carried in the state level query response; and
searching for a next-hop node in the routing table according to a Distributed Hash Table, DHT, algorithm, judging the busy level of the next-hop node, and if the busy level is 2 or 3, checking whether the destination of the packet is within the key range in the charge of the next-hop node, and if the destination is within the range, when the next-hop node is at busy level 2, sending the packet to the next-hop node or when the next-hop node is at busy level 3, sending the packet to a proxy node of the next-hop node.

2. The method of claim 1, wherein the step of checking its busy state and determining its busy level according to the busy state comprises:
by the node that receives the state level query request, checking the number of packets received by the local node within the predetermined interval and determining its busy level according to at least one of the following items: number of packets, Central Processing Unit, CPU, state, memory size, network bandwidth and will of the node.

3. A method for packet routing, comprising:
measuring the number of packets sent by the local node to nodes in the local routing table at the predetermined intervals;
comparing the number of packets with a pre-negotiated top threshold and/or middle threshold; and
updating the busy levels of nodes according to a comparison result; and
searching for a next-hop node in the routing table according to a Distributed Hash Table, DHT, algorithm, measuring the number of packets sent by the local node to the next-hop node, and if the number of packets is above or equal to the middle threshold, checking whether the destination of the packet is within the key range in the charge of the next-hop node, and if the destination is within the range, when the number of packets is between the middle threshold and the top threshold, sending the packet to the next-hop node or when the number of packets is above or equal to the top threshold, sending the packet to a proxy node of the next-hop node.

4. A sending node, comprising:
a message sending module, adapted to send a state level query request to nodes in a local routing table at predetermined intervals;
a busy level updating module, adapted to: receive state level query responses and update busy levels of corresponding nodes in the routing table according to the busy levels carried in the state level query responses; and
a packet sending module, comprising:
a checking unit, adapted to: search for a next-hop routing node in the routing table according to a Distributed Hash Table, DHT, algorithm, judge the busy level of the next-hop routing node, wherein busy levels comprise busy level 1 where all packets can be processed, busy level 2 where only packets within the key range in the charge of the next-hop node can be processed and busy level 3 where no packets can be processed; and if the busy level is 2 or 3, determine whether the destination of the packet is within the key range in the charge of the next-hop routing node; and
a packet sending unit, when the checking unit determines that the destination is within the key range in the charge of the next-hop routing node, adapted to: send the packet to the next-hop node if the next-hop routing node is at busy level 2, or send the packet to a proxy node of the next-hop routing node if the next-hop routing node is at busy level 3.

5. A sending node, comprising:
a measuring module, adapted to measure the number of packets sent by the local node to nodes in a local routing table at predetermined intervals;
a comparing module, adapted to compare the number of packets measured by the measuring module and a pre-negotiated top threshold and/or middle threshold;
a busy level updating module, adapted to update busy levels of nodes according to a comparison result of the comparing module; and
a packet sending module, comprising:
a checking unit, adapted to: search for a next-hop routing node in the routing table according to a Distributed Hash Table, DHT, algorithm, check the number of packets sent by the local node to the next-hop node, and if the number of packets is above or equal to the middle threshold, judge whether the destination of the packet is within the key range in the charge of the next-hop routing node; and
a packet sending unit, when the checking unit determines that the destination is within the key range in the charge of the next-hop routing node, adapted to: send the packet to the next-hop routing node if the number of packets is between the middle threshold and the top threshold, or send the packet to a proxy node of the next-hop routing node if the number of packets is above or equal to the top threshold.

6. A system for packet routing, comprising:
a sending node according to claim 4 or 5 and
a routing node adapted to receive the packet from the sending node and choose a next-hop routing node according to a Distributed Hash Table, DHT, algorithm and locally stored busy levels of other nodes.

## Patentansprüche

1. Verfahren zur Paketlenkung, das Folgendes umfasst:
Senden (101) einer Zustandsebenenabfrage-Anforderung zu Knoten in einer Lenkungstabelle in den vorgegebenen Intervallen;
durch einen Knoten, der die Zustandsebenenabfrage-Anforderung empfängt, Prüfen (102) seines Belegtzustands, Bestimmen seiner Belegtebene in Übereinstimmung mit dem Belegtzustand und Zurückleiten einer Zustandsebenenabfrage-Antwort, die die Belegtebene führt, wobei die Belegtebenen Folgendes umfassen: Belegtebene 1, auf der alle Pakete verarbeitet werden können, Belegtebene 2, auf der nur Pakete innerhalb eines Schlüsselbereichs in der Last des Knotens verarbeitet werden können, und Belegtebene 3, auf der keine Pakete verarbeitet werden können;
wobei dann, wenn die Belegtebene des Knotens, der die Zustandsebenenabfrage-Anforderung empfängt, Belegtebene 2 ist, die Zustandsebenenabfrage-Antwort den Schlüsselbereich in der Last des Knotens, der die Zustandsebenenabfrage-Anforderung empfängt, führt; und
wobei dann, wenn die Belegtebene des Knotens, der die Zustandsebenenabfrage-Anforderung empfängt, Belegtebene 3 ist, die Zustandsebenenabfrage-Antwort den Schlüsselbereich in der Last des Knotens, der die Zustandsebenenabfrage-Anforderung empfängt, und einen Schlüssel seines Proxy-Knotens führt; und
bei Empfang der Zustandsebenenabfrage-Antwort Aktualisieren (103) der Belegtebene, die dem Knoten entspricht, in Übereinstimmung mit der Belegtebene, die in der Zustandsebenenabfrage-Antwort geführt wird; und
Suchen nach einem Knoten für den nächsten Sprung in der Lenkungstabelle in Übereinstimmung mit einem Algorithmus für verteilte Hash-Tabelle, DHT-Algorithmus, Beurteilen der Belegtebene des Knotens für den nächsten Sprung und, falls die Belegtebene 2 oder 3 ist, Prüfen, ob das Ziel des Pakets innerhalb des Schlüsselbereichs in der Last des Knotens für den nächsten Sprung ist, und falls das Ziel innerhalb des Bereichs liegt, wenn der Knoten für den nächsten Sprung die Belegtebene 2 hat, Senden des Pakets zu dem Knoten für den nächsten Sprung, oder, wenn der Knoten für den nächsten Sprung die Belegtebene 3 hat, Senden des Pakets zu einem Proxy-Knoten des Knotens für den nächsten Sprung.

2. Verfahren nach Anspruch 1, wobei der Schritt des Prüfens seines Belegtzustands und des Bestimmens seiner Belegtebene in Übereinstimmung mit dem Belegtzustand Folgendes umfasst:
durch den Knoten, der die Zustandsebenenabfrage-Anforderung empfängt, Prüfen der Anzahl von Paketen, die von dem lokalen Knoten innerhalb des vorgegebenen Intervalls empfangen werden, und Bestimmen seiner Belegtebene in Übereinstimmung mit wenigstens einem der folgenden Elemente: Anzahl von Paketen, Zustand der Zentraleinheit, CPU, Speichergröße, Netzbandbreite und Absicht des Knotens.

3. Verfahren zur Paketlenkung, das Folgendes umfasst:
Messen der Anzahl von Paketen, die von dem lokalen Knoten zu Knoten in der lokalen Lenkungstabelle gesendet werden, in den vorgegebenen Intervallen;
Vergleichen der Anzahl von Paketen mit einem im Voraus verhandelten oberen Schwellenwert und/oder mittleren Schwellenwert; und
Aktualisieren der Belegtebenen von Knoten in Übereinstimmung mit einem Vergleichsergebnis; und
Suchen nach einem Knoten für den nächsten Sprung in der Lenkungstabelle in Übereinstimmung mit einem Algorithmus für verteilte Hash-Tabelle, DHT-Algorithmus, Messen der Anzahl von Paketen, die von dem lokalen Knoten zu dem Knoten für den nächsten Sprung gesendet werden, und, falls die Anzahl von Paketen größer oder gleich dem mittleren Schwellenwert ist, Prüfen, ob das Ziel des Pakets innerhalb des Schlüsselbereichs in der Last des Knotens für den nächsten Sprung liegt, und falls das Ziel innerhalb des Bereichs liegt, wenn die Anzahl von Paketen zwischen dem mittleren Schwellenwert und dem oberen Schwellenwert liegt, Senden des Pakets zu dem Knoten für den nächsten Sprung, oder, wenn die Anzahl von Paketen größer oder gleich dem oberen Schwellenwert ist, Senden des Pakets zu einem Proxy-Knoten des Knotens für den nächsten Sprung.

4. Sendeknoten, der Folgendes umfasst:
ein Nachrichtensendemodul, das dafür ausgelegt ist, eine Zustandsebenenabfrage-Anforderung zu Knoten in einer lokalen Lenkungstabelle in vorgegebenen Intervallen zu senden;
ein Belegtebenen-Aktualisierungsmodul, das dafür ausgelegt ist: Zustandsebenenabfrage-Antworten zu empfangen und Belegtebenen entsprechender Knoten in der Lenkungstabelle in Übereinstimmung mit den Belegtebenen, die in den Zustandsebenenabfrage-Antworten geführt werden, zu aktualisieren; und
ein Paketsendemodul, das Folgendes umfasst:
eine Prüfeinheit, die dafür ausgelegt ist: nach einem Lenkungsknoten für den nächsten Sprung in der Lenkungstabelle in Übereinstimmung mit einem Algorithmus für verteilte Hash-Tabelle, DHT-Algorithmus, zu suchen, die Belegtebene des Lenkungsknotens für den nächsten Sprung zu beurteilen, wobei Belegtebenen eine Belegtebene 1, wo sämtliche Pakete verarbeitet werden können, eine Belegtebene 2, wo nur Pakete innerhalb des Schlüsselbereichs in der Last des Knotens für den nächsten Sprung verarbeitet werden können, und eine Belegtebene 3, wo keine Pakete verarbeitet werden können, umfassen; und falls die Belegtebene 2 oder 3 ist, zu bestimmen, ob das Ziel des Pakets innerhalb des Schlüsselbereichs in der Last des Lenkungsknotens für den nächsten Sprung liegt; und
eine Paketsendeeinheit, die dann, wenn die Prüfeinheit bestimmt, dass das Ziel innerhalb des Schlüsselbereichs in der Last des Lenkungsknotens für den nächsten Sprung liegt, dafür ausgelegt ist: das Paket zu dem Knoten für den nächsten Sprung zu senden, falls der Lenkungsknoten für den nächsten Sprung die Belegtebene 2 hat, oder das Paket zu einem Proxy-Knoten des Lenkungsknotens für den nächsten Sprung zu senden, falls der Lenkungsknoten für den nächsten Sprung die Belegtebene 3 hat.

5. Sendeknoten, der Folgendes umfasst:
ein Messmodul, das dafür ausgelegt ist, die Anzahl von Paketen zu messen, die von dem lokalen Knoten zu Knoten in einer lokalen Lenkungstabelle in vorgegebenen Intervallen gesendet werden;
ein Vergleichsmodul, das dafür ausgelegt ist, die Anzahl von Paketen, die durch das Messmodul gemessen werden, und einen im Voraus verhandelten oberen Schwellenwert und/oder mittleren Schwellenwert zu vergleichen;
ein Belegtebenen-Aktualisierungsmodul, das dafür ausgelegt ist, Belegtebenen von Knoten in Übereinstimmung mit einem Vergleichsergebnis des Vergleichsmoduls zu aktualisieren; und
ein Paketsendemodul, das Folgendes umfasst:
eine Prüfeinheit, die dafür ausgelegt ist: nach einem Lenkungsknoten für den nächsten Sprung in der Lenkungstabelle in Übereinstimmung mit einem Algorithmus für verteilte Hash-Tabelle, DHT-Algorithmus, zu suchen, die Anzahl von Paketen zu prüfen, die von dem lokalen Knoten zu dem Knoten für den nächsten Sprung gesendet werden, und, falls die Anzahl von Paketen größer oder gleich dem mittleren Schwellenwert ist, zu beurteilen, ob das Ziel des Pakets innerhalb des Schlüsselbereichs in der Last des Lenkungsknotens für den nächsten Sprung liegt; und
eine Paketsendeeinheit, die dann, wenn die Prüfeinheit bestimmt, dass das Ziel innerhalb des Schlüsselbereichs in der Last des Lenkungsknotens für den nächsten Sprung liegt, dafür ausgelegt ist:
das Paket zu dem Lenkungsknoten für den nächsten Sprung zu senden, falls die Anzahl von Paketen zwischen dem mittleren Schwellenwert und dem oberen Schwellenwert liegt, oder das Paket zu einem Proxy-Knoten des Lenkungsknotens für den nächsten Sprung zu senden, falls die Anzahl von Paketen größer oder gleich dem oberen Schwellenwert ist.

6. System zur Paketlenkung, das Folgendes umfasst:
einen Sendeknoten nach Anspruch 4 oder 5 und
einen Lenkungsknoten, der dafür ausgelegt ist, das Paket von dem Sendeknoten zu empfangen und einen Lenkungsknoten für den nächsten Sprung in Übereinstimmung mit einem Algorithmus für verteilte Hash-Tabelle, DHT-Algorithmus, und mit lokal gespeicherten Belegtebenen anderer Knoten zu wählen.

## Revendications

1. Procédé de routage de paquets, comprenant les étapes suivantes :
envoyer (101) une requête de demande de niveau d'état à des noeuds présents dans une table de routage aux intervalles prédéterminés ;
par un noeud qui reçoit la requête de demande de niveau d'état, contrôler (102) son état occupé, déterminer son niveau d'occupation selon l'état occupé et retourner une réponse de demande de niveau d'état qui contient le niveau d'occupation, les niveaux d'occupation comprenant : le niveau d'occupation 1 dans lequel tous les paquets peuvent être traités, le niveau d'occupation 2 dans lequel seuls les paquets compris à l'intérieur d'un espace de clés incombant au noeud peuvent être traités, et le niveau d'occupation 3 dans lequel aucun paquet ne peut être traité ;
lorsque le niveau d'occupation du noeud recevant la requête de demande de niveau d'état est le niveau d'occupation 2, la réponse de demande de niveau d'état contient l'espace de clés incombant au noeud recevant la requête de demande de niveau d' état ; et
lorsque le niveau d'occupation du noeud recevant la requête de demande de niveau d'état est le niveau d'occupation 3, la réponse de demande de niveau d'état contient l'espace de clés incombant au noeud recevant la requête de demande de niveau d'état et une clé de son noeud mandataire ; et
lors de la réception de la réponse de demande de niveau d'état, mettre à jour (103) le niveau d'occupation correspondant au noeud selon le niveau d'occupation contenu dans la réponse de demande de niveau d' état ; et
rechercher un noeud de saut suivant dans la table de routage selon un algorithme de table de hachage distribuée, DHT, déterminer le niveau d'occupation du noeud de saut suivant, et si le niveau d'occupation est 2 ou 3, vérifier si la destination du paquet est comprise à l'intérieur de l'espace de clés incombant au noeud de saut suivant, et si la destination est comprise à l'intérieur de l'espace, lorsque le noeud de saut suivant est au niveau d'occupation 2, envoyer le paquet au noeud de saut suivant ou lorsque le noeud de saut suivant est au niveau d'occupation 3, envoyer le paquet à un noeud mandataire du noeud de saut suivant.

2. Procédé selon la revendication 1, dans lequel l'étape consistant à contrôler son état occupé et à déterminer son niveau d'occupation selon l'état occupé comprend :
par le noeud qui reçoit la requête de demande de niveau d'état, contrôler le nombre de paquets reçus par le noeud local dans l'intervalle prédéterminé et déterminer son niveau d'occupation selon au moins un des éléments suivants : le nombre de paquets, l'état de l'unité de traitement centrale, CPU, la taille de la mémoire, la bande passante réseau et la volonté du noeud.

3. Procédé de routage de paquets, comprenant les étapes suivantes :
mesurer le nombre de paquets envoyés par le noeud local aux noeuds présents dans la table de routage locale aux intervalles prédéterminés ;
comparer le nombre de paquets avec un seuil supérieur et/ou un seuil moyen pré-négociés ; et
mettre à jour les niveaux d'occupation des noeuds selon un résultat de comparaison ; et
rechercher un noeud de saut suivant dans la table de routage selon un algorithme de table de hachage distribuée, DHT, mesurer le nombre de paquets envoyés par le noeud local au noeud de saut suivant, et si le nombre de paquets est supérieur ou égal au seuil moyen, vérifier si la destination du paquet est comprise à l'intérieur de l'espace de clés incombant au noeud de saut suivant, et si la destination est comprise à l'intérieur de l'espace, lorsque le nombre de paquets est entre le seuil moyen et le seuil supérieur, envoyer le paquet au noeud de saut suivant ou lorsque le nombre de paquets est supérieur ou égal au seuil supérieur, envoyer le paquet à un noeud mandataire du noeud de saut suivant.

4. Noeud émetteur, comprenant :
un module d'envoi de messages, adapté pour envoyer une requête de demande de niveau d'état aux noeuds présents dans une table de routage locale à des intervalles prédéterminés ;
un module de mise à jour de niveau d'occupation, adapté pour : recevoir des réponses de demande de niveau d'état et mettre à jour les niveaux d'occupation de noeuds correspondants dans la table de routage selon les niveaux d'occupation contenus dans les réponses de demande de niveau d'état ; et
un module d'envoi de paquets, comprenant :
une unité de vérification, adaptée pour : rechercher un noeud de routage de saut suivant dans la table de routage selon un algorithme de table de hachage distribuée, DHT, juger le niveau d'occupation du noeud de routage de saut suivant, les niveaux d'occupation comprenant le niveau d'occupation 1 dans lequel tous les paquets peuvent être traités, le niveau d'occupation 2 dans lequel seuls les paquets compris à l'intérieur de l'espace de clés incombant au noeud de saut suivant peuvent être traités et le niveau d'occupation 3 dans lequel aucun paquet ne peut être traité ; et si le niveau d'occupation est 2 ou 3, déterminer si la destination du paquet est comprise à l'intérieur de l'espace de clés incombant au noeud de routage de saut suivant ; et
une unité d'envoi de paquets, lorsque l'unité de vérification détermine que la destination est comprise à l'intérieur de l'espace de clés incombant au noeud de routage de saut suivant, adaptée pour : envoyer le paquet au noeud de saut suivant si le noeud de routage de saut suivant est au niveau d'occupation 2, ou envoyer le paquet à un noeud mandataire du noeud de routage de saut suivant si le noeud de routage de saut suivant est au niveau d'occupation 3.

5. Noeud émetteur, comprenant :
un module de mesure, adapté pour mesurer le nombre de paquets envoyés par le noeud local aux noeuds présents dans une table de routage locale à des intervalles prédéterminés ;
un module de comparaison, adapté pour comparer le nombre de paquets mesuré par le module de mesure et un seuil supérieur et/ou un seuil moyen pré-négociés ;
un module de mise à jour de niveau d'occupation, adapté pour mettre à jour les niveaux d'occupation des noeuds selon un résultat de comparaison du module de comparaison ; et
un module d'envoi de paquets, comprenant :
une unité de vérification, adaptée pour : rechercher un noeud de routage de saut suivant dans la table de routage selon un algorithme de table de hachage distribuée, DHT, vérifier le nombre de paquets envoyés par le noeud local au noeud de saut suivant, et si le nombre de paquets est supérieur ou égal au seuil moyen, juger si la destination du paquet est comprise à l'intérieur de l'espace de clés incombant au noeud de routage de saut suivant ; et
une unité d'envoi de paquets, lorsque l'unité de vérification détermine que la destination est comprise à l'intérieur de l'espace de clés incombant au noeud de routage de saut suivant, adaptée pour : envoyer le paquet au noeud de routage de saut suivant si le nombre de paquets est entre le seuil moyen et le seuil supérieur, ou envoyer le paquet à un noeud mandataire du noeud de routage de saut suivant si le nombre de paquets est supérieur ou égal au seuil supérieur.

6. Système de routage de paquets, comprenant :
un noeud émetteur selon la revendication 4 ou 5 et
un noeud de routage adapté pour recevoir le paquet à partir du noeud émetteur et choisir un noeud de routage de saut suivant selon un algorithme de table de hachage distribuée, DHT, et les niveaux d'occupation stockés localement d'autres noeuds.
